# EUROPEAN PATENT APPLICATION

(11) **EP 4 712 516 A1**
(43) Date of publication of application: **18.03.2026**
(21) Application number: 23936095.1
(22) Date of filing: 10.05.2023
(51) Int. Cl.: H04W 4/024

(54) **MEASUREMENT METHODS AND APPARATUSES, AND COMPUTER-READABLE STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/093350
(87) International publication number: WO 2024/229774

(57) **Abstract**

The embodiments of the present disclosure relate to the technical field of communications, and disclose measurement methods and apparatuses, and a computer-readable storage medium. A measurement method applied to a user equipment (UE) side comprises: determining a global navigation satellite system (GNSS) position; and reporting to a network device first indication information, the first indication information being used for indicating a GNSS validity period of the GNSS position, or being used for indicating the GNSS position. In the embodiments of the present disclosure, after determining the GNSS position, a UE reports to the network device the information used for indicating the determined GNSS position, or used for indicating the GNSS validity period of the determined GNSS position, so as to inform the network device of the GNSS position acquired by the UE, aiding in subsequent operations so as to improve system performance.

## Description

### TECHNICAL FIELD

The embodiments of the present disclosure relate to the field of communication technology and, specifically, to a measurement method, an apparatus and a computer-readable storage medium.

### BACKGROUND

Some internet of things (IoT) terminals cannot simultaneously support the reception of the global navigation satellite system (GNSS) and the transmission of the long term evolution (LTE) system. The GNSS position acquired by a UE is only valid for a period of time. After this period, the GNSS position of the UE becomes outdated and the UE is to reacquire the GNSS position. Since the UE (terminal) does not support simultaneous GNSS reception and LTE transmission/reception, only one of them can be performed at a time.

### SUMMARY

Some embodiments of the present disclosure provide a measurement method, an apparatus and a computer-readable storage medium.

In a first aspect, some embodiments of the present disclosure provide a measurement method, being applied to a user equipment UE and including:
determining a global navigation satellite system GNSS position;
reporting first indication information to a network device, where the first indication information indicates a GNSS validity period of the GNSS position, or indicates the GNSS position.

In a second aspect, some embodiments of the present disclosure provide a measurement method, being applied to a network device and including:
receiving first indication information reported by a user equipment UE, where the first indication information indicates a GNSS validity period of a GNSS position determined by the UE, or indicates the GNSS position determined by the UE.

In a third aspect, some embodiments of the present disclosure provide a measurement apparatus, being applied to a user equipment UE and including:
a first processing unit, configured to determine a global navigation satellite system GNSS position;
a first communication unit, configured to report first indication information to a network device, where the first indication information indicates a GNSS validity period of the GNSS position, or indicates the GNSS position.

In a fourth aspect, some embodiments of the present disclosure provide a measuring apparatus, being applied to a network device and including:
a second communication unit, configured to receive first indication information reported by a user equipment UE, where the first indication information indicates a GNSS validity period of a GNSS position, or indicates the GNSS position.

In a fifth aspect, some embodiments of the present disclosure provide a communication device, including:
a transceiver;
a processor;
a memory storing a computer-executable instruction;
where, the processor is connected to the transceiver and the memory respectively, and configured to load and execute the computer-executable instruction to implement the measurement method according to foregoing first aspect or second aspect.

In a sixth aspect, some embodiments of the present disclosure provide a communication system, including: a user equipment and a network device, where the user equipment is configured to implement the measurement method according to foregoing first aspect, and the network device is configured to implement the measurement method according to foregoing second aspect.

In a seven aspect, some embodiments of the present disclosure provide a computer-readable storage medium storing a computer program, where the computer-readable storage medium stores an executable instruction, and the executable instruction is loaded and executed by the processor to implement the measurement method according to foregoing first aspect or second aspect.

The technical solution provided by the according to some embodiments of the present disclosure may include the following beneficial effects.

After determining the GNSS position, the UE reports information, indicating the determined GNSS position or indicating the information of the GNSS validity period of the determined GNSS position, to the network device, so as to inform the network device of the acquired GNSS position, thereby facilitating subsequent operations and improving system performance.

It should be understood that the foregoing general description and the following detailed description are exemplary and explanatory only, and do not limit the present disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the present disclosure.
FIG. 1 is a schematic structural diagram of a wireless communication system according to an embodiment of the present disclosure.
FIG. 2a is a first schematic diagram of signal transmission in a wireless communication system according to an exemplary embodiment of the present disclosure.
FIG. 2b is a second schematic diagram of signal transmission in a wireless communication system according to an exemplary embodiment of the present disclosure.
FIG. 3 is a flow chart of a measurement method according to an embodiment of the present disclosure.
FIG. 4 is a first flow chart of a measurement method according to an exemplary embodiment of the present disclosure.
FIG. 5 is a second flow chart of a measurement method according to an exemplary embodiment of the present disclosure.
FIG. 6 is a third flow chart of a measurement method according to an exemplary embodiment of the present disclosure.
FIG. 7 is a fourth flow chart of a measurement method according to an exemplary embodiment of the present disclosure.
FIG. 8 is a flow chart of a measurement method according to another embodiment of the present disclosure.
FIG. 9 is a fifth flow chart of a measurement method according to an exemplary embodiment of the present disclosure.
FIG. 10 is a sixth flow chart of a measurement method according to an exemplary embodiment of the present disclosure.
FIG. 11 is a seventh flow chart of a measurement method according to an exemplary embodiment of the present disclosure.
FIG. 12 is an eighth flow chart of a measurement method according to an exemplary embodiment of the present disclosure.
FIG. 13 is a ninth flow chart of a measurement method according to an exemplary embodiment of the present disclosure.
FIG. 14 is a block diagram of a measurement apparatus according to an embodiment of the present disclosure.
FIG. 15 is a block diagram of a measurement apparatus according to another embodiment of the present disclosure.
FIG. 16 is a block diagram of an apparatus 800 for implementing measurement according to an exemplary embodiment of the present disclosure.
FIG. 17 is a block diagram of an apparatus 800 for implementing measurement according to an exemplary embodiment of the present disclosure.

### DETAILED DESCRIPTION

The following describes in detail some embodiments of the present disclosure, examples of which are shown in the accompanying drawings, where the same or similar reference numerals throughout represent the same or similar elements or elements having the same or similar functions. Some embodiments described below with reference to the accompanying drawings are exemplary and are intended only to explain the present disclosure and are not to be explained as limitation to the present disclosure.

In the following description, when referring to the accompanying drawings, unless otherwise indicated, the same numbers in different drawings represent the same or similar elements. The embodiments described in the following exemplary embodiments do not represent all embodiments consistent with the present disclosure. Instead, they are merely examples of apparatus and methods consistent with certain aspects of the present disclosure, as detailed in the appended claims.

It can be understood for those skilled in the art that, unless otherwise stated, the singular forms "a", "an", "said" and "the" used herein may also include plural forms. It should be further understood that the term "comprising/including" used in the specification of the present disclosure refers to the presence of the stated features, integers, steps, operations, elements, and/or components, but does not preclude the presence or addition of one or more other features, integers, steps, operations, elements, components, and/or groups thereof.

It should be understood that when referring to an element as being "connected" or "coupled" to another element, it can be directly connected or coupled to the other element, or intervening elements may be present. Furthermore, "connected" or "coupled" as used herein may include wireless connections or wireless couplings. The term "and/or" as used herein includes all or any elements and all combinations of one or more of the associated listed items.

It should also be understood that although the terms first, second, third and the like may be used to describe various information in some embodiments of the present disclosure, such information should not be limited to these terms. These terms are only used for distinguishing information of the same type from each other. For example, without departing from the scope of some embodiments of the present disclosure, the first information may also be referred to as the second information, and similarly, the second information may also be referred to as the first information. Depending on the context, the words "if" and "as if" as used herein may be interpreted as "upon..." or "when..." or "in response to determining".

In the description of the present disclosure, unless otherwise specified, "multiple/plurality of" refers to two or more than two, and other quantifiers are similar in the present disclosure; "at least one of the following", "one or more" or similar expressions refer to any combination of these items, including any combination of single or plural items. For example, one or more of a, b, or c can represent: a, b, c, a-b, a-c, b-c, or a-b-c, where a, b, and c can be single or plural; "and/or" is a type of association relationship that describes associated objects, indicating that three relationships can exist. For example, A and/or B can represent: A exists alone, both A and B exist, and B exists alone, where A and B can be singular or plural.

Although the operations are described in a specific order in the drawings in the embodiments of the present disclosure, it should not be understood as requiring the operations to be performed in the specific order shown or in a serial order, or requiring the execution of all the operations shown to acquire the desired results. In certain environments, multitasking and parallel processing may be advantageous. Furthermore, sending multiple messages via the same message may also be advantageous.

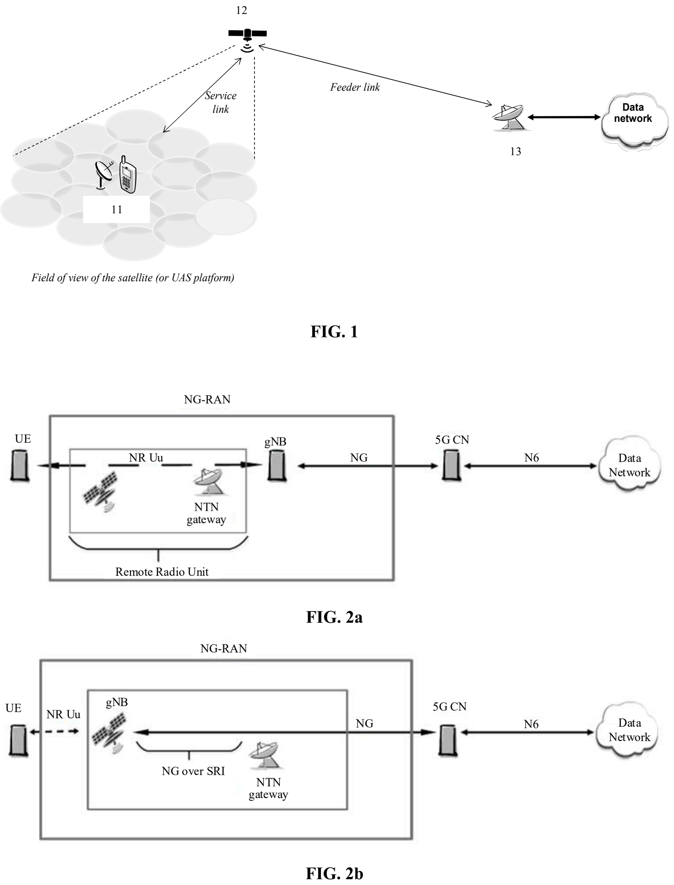

Non-terrestrial network (NTN) is an important technology introduced in 5G systems. It provides wireless resources via satellites (or unmanned aerial vehicle systems) rather than ground base stations. Referring to FIG. 1, which shows a schematic structural diagram of a wireless communication system provided by an embodiment of the present disclosure. As shown in FIG. 1, the wireless communication system is based on cellular mobile communication technology and may include a terminal 11 and a satellite (or unmanned aerial vehicle system) 12.

Terminal 11 can be several in number, and it refers to device that provides voice and/or data connectivity to users. Terminal 11 can communicate with one or more core networks via a radio access network (RAN). Terminal 11 can be an internet of things (IoT) terminal, such as a sensor device, a mobile phone (or a "cellular" phone), and a computer with an IoT terminal. For example, terminal 11 can be fixed apparatus, portable apparatus, pocket-sized apparatus, handheld apparatus, computer-built-in apparatus, or vehicle-mounted apparatus, for example, station (STA), subscriber unit, subscriber station, mobile station, mobile, remote station, access point, remote termina, access terminal, user terminal, user agent or user equipment (UE). Alternatively, terminal 11 may be a device of an unmanned aerial vehicle (UAV). Alternatively, terminal 11 may be an onboard device, such as a driving computer with wireless communication capabilities, or a wireless communication device connected to an external driving computer. Alternatively, terminal 11 may be a roadside device, such as streetlight, traffic light, or other roadside device with wireless communication capabilities.

The satellite (or UAV system) 12 and the ground base station can be network devices in a wireless communication system. The wireless communication system can also be a 5G system, also known as a new radio (NR) system or a 5G NR system. Alternatively, the wireless communication system can be a next-generation system of the 5G system. The access network in the 5G system can be called an NG-RAN (New Generation-Radio Access Network), or a machine-type communication (MTC) system.

Service link connection can be established between the satellite (or UAV) 12 and the terminal 11 via a wireless air interface. In various implementations, the wireless air interface may be a wireless air interface based on the fifth-generation mobile communication network technology (5G) standard. For example, the wireless air interface may be a new air interface; or, the wireless air interface may be a wireless air interface based on a next-generation mobile communication network technology standard.

In some embodiments, end to end (E2E) connections may also be established between terminals 11, for example, in vehicle-to-everything (V2X) communication scenarios, such as vehicle to vehicle (V2V) communication, vehicle to infrastructure (V2I) communication, and vehicle to pedestrian (V2P) communication.

In some embodiments, the wireless communication system may further include a network management device 13.

A feeder link connection is established between the satellite (or UAV) 12 and the network management device 13. The network management device 13 may be a core network device in a wireless communication system. For example, the network management device 13 may be a gateway (GW) or a signaling gateway, where the gateway may be a serving gateway (SGW), a public data network gateway (PGW) and the like. The implementation of the network management device 13 is not limited in the present disclosure.

Based on different ways of signal processing performed by satellite, signal transmission modes can be categorized as transparent transmission mode and regeneration mode. In transparent transmission mode, as shown in FIG. 2a, the NTN ground station transmits the gNB signal to the satellite. The satellite converts the signal to the satellite frequency band and then transmits it to the UE via the satellite frequency band. In addition to frequency conversion and signal amplification, demodulation is not performed by the satellite on the gNB signal. In regeneration mode, as shown in FIG. 2b, after the NTN ground station transmits the gNB signal to the satellite, the signal is firstly demodulated and decoded, then re-encoded and modulated (a process known as regeneration) by the satellite, and the regenerated signal is transmitted via the satellite frequency band.

As for internet of things (IoT) terminal, some terminals cannot support the performance of simultaneous GNSS reception and LTE transmission/reception. The GNSS position acquired by the UE is only valid for a period of time. After this period, the UE's GNSS position becomes outdated and the UE is to reacquire the GNSS position. Since the UE (terminal) does not support simultaneous GNSS reception and LTE transmission/reception, only one of them can be performed at a time.

In order to solve the above problems, the following solutions can be adopted: the UE returns to the idle state after the GNSS position is passed; or, further enhancements can be considered. For example: the UE performs GNSS measurements through a measurement gap. Specifically, the base station triggers the UE to perform GNSS measurements. After receiving the GNSS measurement indication from the base station, the UE performs GNSS measurements in a configured or agreed measurement gap based on the measurement indication. If the UE does not receive the GNSS measurement triggered by the base station, the UE may autonomously trigger GNSS measurements in a configured or system-agreed measurement gap. In both of the above two GNSS measurements, the UE performs measurements during one measurement gap configured or agreed upon by the system. However, the measurement gap is a dedicated time period for the UE to perform GNSS measurements. The UE does not perform other operations during this period, thereby seriously affecting system performance.

Accordingly, another solution has been proposed: the UE autonomously performs GNSS measurements during the DRX inactive period. However, since the UE autonomously selects the GNSS measurement period, the network does not know in which period during the DRX inactive period the UE performs the measurement, nor does it know the specific operations included, for example, the UE's behavior after acquiring the GNSS position; whether the UE performs GNSS measurements for the measurement gap configured by the network after acquiring the GNSS position; under what circumstances the UE can perform GNSS measurements during the DRX inactive period; and the limitations on the impact, on other behaviors, of the UE's GNSS measurements during the DRX inactive period.

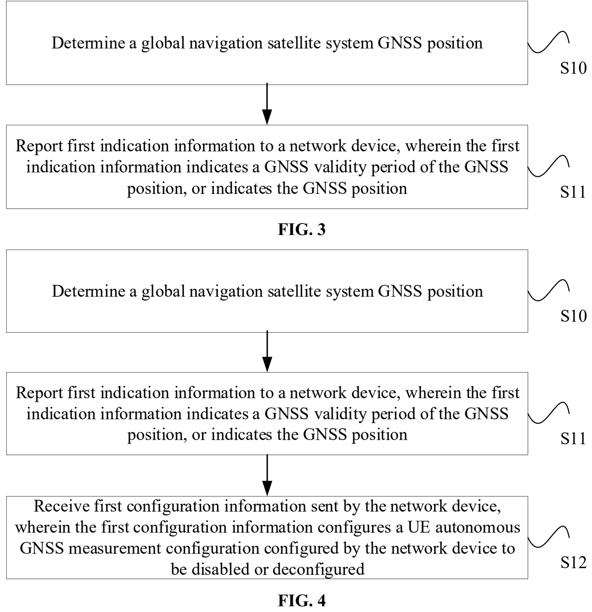

Therefore, the present disclosure provides a measurement method based on the aforementioned wireless communication system. The following describes various embodiments of the method proposed in the present disclosure in detail with reference to FIG.3-FIG.17.

FIG. 3 is a flow chart of a measurement method according to an embodiment of the present disclosure. As shown in FIG. 3, the measurement method is applied to the user equipment (UE) and includes the followings.

In S10, the GNSS position is determined.

In S11, first indication information is reported to a network device, where the first indication information indicates a GNSS validity period of the GNSS position, or indicates the GNSS position.

In some embodiments, the GNSS validity period is a remaining GNSS validity period or an entire GNSS validity period.

In the aforementioned solution, the UE reports information, indicating a newly acquired GNSS position or indicating the GNSS validity period of the newly acquired GNSS position, to the network device, so as to inform the network device of the new GNSS position, thereby facilitating subsequent operations and improving system performance.

In some embodiments, step S10 may specifically include that the GNSS position is determined based on an autonomous GNSS measurement performed during a connected-state discontinuous reception (DRX) inactive period.

In other words, when the UE acquires the GNSS position in the process of the autonomous GNSS measurement during the connected-state DRX inactive period, the UE may report indication information (corresponding to the first indication information in the present disclosure), to the network device, indicating the acquired GNSS position, or indicating the GNSS validity period of the acquired GNSS position, so as to inform the network device of the acquired GNSS position, thereby providing a basis for subsequent operations.

It should be noted that, in such embodiments, when the UE performs GNSS measurement during the connected-state DRX inactive period, the performance requirements of the radio link failure (RLM) or radio link monitoring (RRM) meet normal requirements, or the performance requirements of the RLM or the RRM may be reduced.

It should also be noted that, in the embodiments, the autonomous GNSS measurement performed by the UE during the connected-state DRX inactive period refers to a GNSS measurement, for which the UE autonomously determines the measurement period, performed during the connected-state DRX inactive period, where the measurement period of the GNSS measurement performed is not restricted by the network device configuration or the measurement configuration agreed upon by the system.

In some embodiments, step S10 is performed when at least one of the following conditions is met:
a first condition being that all downlink hybrid automatic repeat requests (HARQ) of the UE are configured to disable HARQ feedback;
a second condition being that all uplink HARQ of the UE are configured in a HARQ mode B;
a third condition being before an expiry of a GNSS validity period of a last acquired GNSS position.

Downlink disable HARQ feedback means that for downlink HARQ, the UE is not to perform uplink HARQ ACK feedback after the base station sends DL data. Uplink HARQ mode B means that in this mode, the DRX UL HARQ RTT timer is not started, and the base station does not perform uplink HARQ retransmission scheduling based on the decoding results of uplink data.

In other words, in such embodiments, for the UE to perform autonomous GNSS measurement during the connected-state DRX inactive period, certain conditions are to be met. For example, all downlink HARQs of the UE are configured to disable HARQ feedback, and/or, all uplink HARQs of the UE are configured to HARQ mode B, and/or, the GNSS validity period of the last acquired GNSS position has not expired (i.e., autonomous GNSS measurement may be performed during the connected-state DRX inactive period before the GNSS validity period of the last acquired GNSS position expires).

In some embodiments, if a difference between a GNSS validity period of a currently acquired GNSS position and a GNSS validity period of a last acquired GNSS position is greater than a first threshold, the first indication information, indicating the GNSS validity period of the currently acquired GNSS position, is reported to the network device.

Specifically, in such embodiments, the GNSS validity period is the remaining GNSS validity period.

In other words, the difference is equal to a result obtained by subtracting the previous remaining GNSS validity period from the current remaining GNSS validity period. In case that the difference is greater than a first threshold, the UE reports first indication information to the network device, where the first indication information indicates the remaining GNSS validity period of the currently acquired GNSS position. In this way, the network device may acquire more accurate information for subsequent operations.

In some embodiments, the method further includes the following.

The GNSS position is determined before start of a measurement period of a UE autonomous GNSS measurement configured by the network device, and any one of the following operations is performed:
a UE autonomous GNSS measurement configuration configured by the network device is deleted;
the invalidation of the UE autonomous GNSS measurement configuration configured by the network device is determined;
a GNSS measurement is not performed during a measurement period of the UE autonomous GNSS measurement configuration configured by the network device,;
whether to perform the GNSS measurement, during the measurement period of the UE autonomous GNSS measurement configuration configured by the network device, is determined.

In such embodiments, when the UE performs autonomous GNSS measurement during the connected-state DRX inactive period, a new GNSS position is acquired before the start of the measurement period of the UE autonomous GNSS measurement configured by the network, and one of the following operations may be performed:
the UE autonomous GNSS measurement configuration configured by the network device is deleted;
the invalidation of the UE autonomous GNSS measurement configuration configured by the network device is determined;
a GNSS measurement is not performed during a measurement period of the UE autonomous GNSS measurement configuration configured by the network device,;
whether to perform GNSS measurement, during the measurement period of the UE autonomous GNSS measurement configuration configured by the network device, is autonomously determined.

In the above-mentioned embodiments, the way of determining whether to perform GNSS measurement during the measurement period of UE autonomous GNSS measurement configured by the network device may include the following:
whether to perform the GNSS measurement during the measurement period is determined based on whether a time interval, between an acquisition time of the GNSS position and a start time of the measurement period, is greater than a second threshold; or,
whether to perform the GNSS measurement during the measurement period is determined based on whether a remaining GNSS validity period, at the start time of the measurement period, is greater than a third threshold.

The second threshold and the third threshold may be configured by the network or agreed upon by the system, or may be set by the UE itself.

Specifically, in some embodiments, if the time interval, between the acquisition time of a new GNSS position and the start time of a measurement period for UE autonomous GNSS measurement configured by the network device, is greater than a second threshold, the UE performs GNSS measurement in the measurement period; otherwise, the UE does not perform GNSS measurement in the measurement period. Alternatively, if the remaining GNSS validity period, at the start time of a measurement period of the UE autonomous GNSS measurement configured by the network device, is greater than a third threshold, the UE performs GNSS measurement in the measurement period; otherwise, the UE does not perform GNSS measurement in the measurement period.

Furthermore, the first three operations aforementioned may be for the measurement period of the most recent UE autonomous GNSS measurement configured by the network device, where the start time of the GNSS measurement period may be determined based on the expiration time of the GNSS validity period. For example, the start time of the GNSS measurement period may be determined based on the expiration time of the GNSS validity period of the last GNSS measurement. Alternatively, the first three operations aforementioned may be applied to UE autonomous GNSS measurement where a fixed start time is configured by the network device for the UE.

In some embodiments, the network-configured UE autonomous GNSS measurement refers to GNSS measurement that may be autonomously triggered by the UE at a measurement gap configured by the network or agreed upon by the system.

In some embodiments, as shown in FIG. 4, the method further includes the followings.

In S12, first configuration information sent by the network device is received, where the first configuration information configures a UE autonomous GNSS measurement configuration configured by the network device to be disabled or removed.

In some embodiments, after the UE reports the first indication information to the network device, the network device may send first configuration information to the UE for configuring one, some, or all of UE autonomous GNSS measurement configurations configured by the network device to be disabled or removed.

In other words, after the UE acquires a new GNSS position by performing autonomous GNSS measurement during the connected-state DRX inactive period, indication information may be sent to the network device, and the network device may be informed of the acquisition of the new GNSS position. After receiving the indication information, the network device may determine one or some of UE autonomous GNSS measurement configurations configured by the network device to be disabled or removed, and send configuration information to the UE to inform the UE of the one or some or all of the UE autonomous GNSS measurement configurations configured by the network device to be disabled or removed, thereby avoiding the conflict between "the autonomous GNSS measurement during the connected-state DRX inactive period" and "UE autonomous GNSS measurement configured by the network".

In some embodiments, the first configuration information includes at least one of the following:
second indication information used for determining the UE autonomous GNSS measurement configuration to be disabled or removed;
an ID of the UE autonomous GNSS measurement configuration to be disabled or removed;
a start time of the measurement period of the UE autonomous GNSS measurement configuration to be disabled or removed;
a measurement duration of the UE autonomous GNSS measurement configuration to be disabled or removed.

In some embodiments, the first configuration information may be sent using a radio resource control (RRC) message or a medium access control (MAC) control element (CE) message.

It should be noted that the above-mentioned second indication information may explicitly or implicitly indicate which measurement periods of the UE autonomous GNSS measurement configuration are to be disabled or removed, or may not indicate which specific configuration is to be disabled or removed. Instead, based on the receiving time of the second indication information, the UE autonomously disables or removes the measurement period of the UE autonomous GNSS measurement closest to the receiving time.

It is further to be noted that the measurement duration of the UE autonomous GNSS measurement configuration to be disabled or removed may be one measurement period or multiple periods corresponding to periodic measurements, which is not limited in the embodiments.

In some embodiments, the above-mentioned method may further include: determining to enter an idle state when one of the following conditions is met:
a fourth condition, being that the GNSS position is not acquired through the autonomous GNSS measurement performed during the connected-state DRX inactive period when the GNSS position of the UE expires;
a fifth condition, being that the GNSS position is not acquired through the autonomous GNSS measurement performed during the connected-state DRX inactive period when the GNSS position of the UE expires, and no other GNSS measurement is performed in progress or no other GNSS measurement is performed after a first duration.

In some embodiments, when the GNSS position of the UE is outdated and the GNSS position is not acquired through autonomous GNSS measurement during the connected-state DRX inactive period, the UE enters the idle state, thereby avoiding conflicts with other operations and improving system performance.

In some embodiments, when the GNSS position of the UE is outdated, the GNSS position fails to be acquired through autonomous GNSS measurement during the connected-state DRX inactive period, and no other GNSS measurement is performed in progress or no other GNSS measurement is performed after a first duration, the UE enters the idle state.

In some embodiments, the other GNSS measurements include at least one of the following:
a GNSS measurement triggered by the network device;
a UE autonomous GNSS measurement configured by the network device.

Specifically, in some embodiments, the first duration may be a duration set by the UE itself, or by a system agreement or network configuration. Exemplarily, the unit of the first duration may be a time unit, a subframe, an OFDM symbol, a time slot and the like. For example, the first duration may be 2 time slots, 1 subframe and the like, which is not limited in the embodiments.

In other words, in some embodiments, when the UE's GNSS position is outdated, and the GNSS position is not acquired through autonomous GNSS measurement during the connected-state DRX inactive period, and no GNSS measurement triggered by the network device is performed in progress or upcoming, or nor does any UE autonomous GNSS measurement configured by the network device, the UE enters the idle state. In other words, when the UE's GNSS position is outdated, and the GNSS position is not acquired through autonomous GNSS measurement during the connected-state DRX inactive period, but if the GNSS measurement triggered by the network device is performed in progress or upcoming, or the UE autonomous GNSS measurement configured by the network device is performed, the UE continues to perform the corresponding GNSS measurement; otherwise, the UE enters the idle state.

In the above-mentioned embodiment, the measurement status of the autonomous GNSS measurement during the connected-state DRX inactive period includes at least one of the following: not yet performed, in progress, and completed.

In some embodiments, the above-mentioned method may further include the following:
when the autonomous GNSS measurement during the connected-state DRX inactive period is performed, a GNSS measurement is performed based on a GNSS measurement gap upon reaching a start time of the GNSS measurement gap configured by the network device.

In some embodiments, the GNSS measurement based on the GNSS measurement gap includes at least one of the following:
a GNSS measurement triggered by the network device;
a UE autonomous GNSS measurement configured by the network device.

In other words, in some embodiments, when the autonomous GNSS measurement is performed by the UE during the connected-state DRX inactive period, if the start time of the GNSS measurement gap configured by the network device is reached, the GNSS measurement triggered by the network device or the UE autonomous GNSS measurement configured by the network device is performed, thereby providing an effective solution to resolve the conflict between the autonomous GNSS measurement performed by the UE during the connected-state DRX inactive period and the GNSS measurement gap configured by the network device.

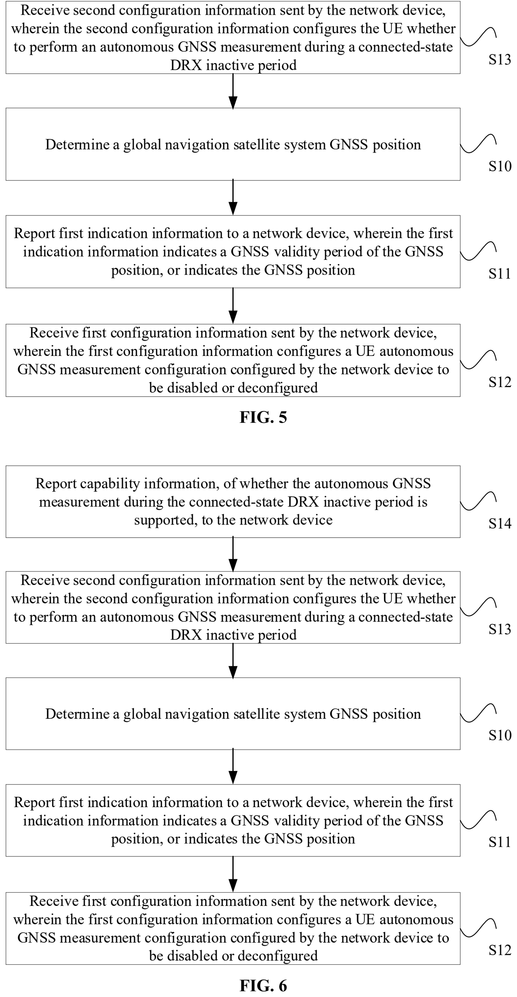

In some embodiments, as shown in FIG. 5, before S10, the method further includes the followings.

In S13, second configuration information sent by the network device is received, where the second configuration information configures the UE whether to perform an autonomous GNSS measurement during the connected-state DRX inactive period.

In some embodiments, the second configuration information may be sent using a radio resource control (RRC) message or a medium access control (MAC) control element (CE) message.

In some embodiments, as shown in FIG. 6, the method further includes the followings.

In S14, capability information, of whether the autonomous GNSS measurement during the connected-state DRX inactive period is supported, is reported to the network device, where the capability information is used for determining the second configuration information.

In other words, the UE may report to the network device whether it supports autonomous GNSS measurement during connected-state DRX inactive period, so that the network device determines configuration information based on the capability information to configure whether the UE can perform autonomous GNSS measurement during connected-state DRX inactive period.

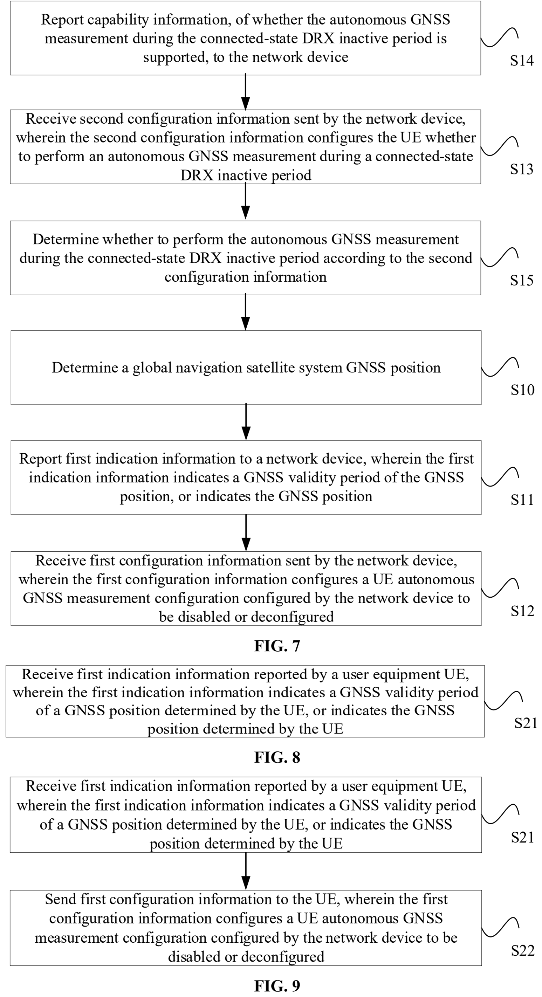

In some embodiments, as shown in FIG. 7, the method further includes the followings.

In S15, it is determined, according to the second configuration information, whether to perform the autonomous GNSS measurement during the connected-state DRX inactive period.

In other words, the network device may configure whether the UE can perform autonomous GNSS measurements during the connected-state DRX inactive period. If so, when the UE acquires the GNSS position by performing autonomous GNSS measurements during the connected-state DRX inactive period, the UE reports indication information to the network device to inform the network device of the acquired GNSS position, thereby providing a basis for subsequent operations.

Exemplarily, if the second configuration information configures the UE in HARQ Mode B, and/or, disables downlink HARQ feedback, the UE determines to perform autonomous GNSS measurements during the connected-state DRX inactive period based on the received second configuration information. Otherwise, the UE cannot perform autonomous GNSS measurements during the connected-state DRX inactive period.

In some embodiments, at least one of the following operations is not affected by performing an autonomous GNSS measurement during the connected-state DRX inactive period:
a reception or transmission of an acknowledgment message (ACK) during the connected-state DRX inactive period;
a reception or transmission of a non-acknowledgement message (NACK) during the connected-state DRX inactive period;
a transmission of a channel sounding reference signal (SRS) during the connected-state DRX inactive period;
a monitoring for a reception of a physical uplink shared channel (PUSCH) triggering B, during the connected-state DRX inactive period, and an addressing of a physical downlink control channel (PDCCH) of a common cell radio network temporary identifier (CC-RNTI).

In other words, when the UE performs autonomous GNSS measurement during the connected-state DRX inactive period, the normal reception or transmission of ACK or NACK during the connected-state DRX inactive period is not affected. For example, if the measurement period of the autonomous GNSS measurement during the connected-state DRX inactive period conflicts with the period of reception or transmission of ACK or NACK during the connected-state DRX inactive period, the reception or transmission of ACK or NACK may be prioritized. In this case, the UE may suspend GNSS measurement and resume GNSS measurement after the transmission or reception of ACK or NACK is completed.

Furthermore, when the UE performs autonomous GNSS measurements during the connected-state DRX inactive period, normal SRS transmission during the connected-state DRX inactive period is not affected. For example, if the measurement period of the autonomous GNSS measurements during the connected-state DRX inactive period conflicts with the period for SRS transmission during the connected-state DRX inactive period, SRS transmission may be prioritized. In this case, the UE may suspend GNSS measurements and resume GNSS measurements after SRS transmission is completed.

When the UE performs autonomous GNSS measurement during the connected-state DRX inactive period, the normal monitoring of the physical uplink shared channel (PUSCH) trigger B during the connected-state DRX inactive period, and the addressing of the physical downlink control channel (PDCCH) of the common cell radio network temporary identifier (CC-RNTI) are not affected.

FIG. 8 is a flow chart of a measurement method according to another embodiment of the present disclosure. As shown in FIG. 8, the measurement method is applied to a network device such as a base station (which may correspond to the ground base station above-mentioned), and the measurement method includes the followings.

In S21, first indication information reported by the user equipment (UE) is received, where the first indication information indicates the GNSS validity period of the GNSS position determined by the UE, or indicates the GNSS position determined by the UE.

In some embodiments, the GNSS validity period may be the remaining GNSS validity period or the entire GNSS validity period.

In the above-mentioned solution, the network device receives information, reported by the UE, indicating the GNSS position determined by the UE, or indicating the GNSS validity period of the GNSS position determined by the UE, and learns that the GNSS position is acquired by the UE, so as to perform subsequent operations and improve system performance.

In some embodiments, the first indication information is reported when the GNSS position is acquired by the UE based on the autonomous GNSS measurement performed during the connected-state DRX inactive period.

In other words, when the UE determines the GNSS position based on autonomous GNSS measurement during the connected-state DRX inactive period, and the UE may report indication information (corresponding to the first indication information in the present disclosure) to the network device to indicate the determined GNSS position, or to indicate the GNSS validity period of the determined GNSS position, so as to inform the network device of the acquired GNSS position, thereby providing a basis for subsequent operations.

In some embodiments, the first indication information, indicating the GNSS validity period of the GNSS position currently acquired, is reported when a difference between the GNSS validity period of the GNSS position currently acquired by the UE and the GNSS validity period of the GNSS position last acquired by the UE is greater than the first threshold.

In the above-mentioned solution, the GNSS validity period is the remaining GNSS validity period.

In some embodiments, the difference is equal to a result obtained by subtracting the previous remaining GNSS validity period from the current remaining GNSS validity period. In case that the difference is greater than a first threshold, the UE reports first indication information to the network device, where the first indication information indicates the remaining GNSS validity period of the currently acquired GNSS position. In this way, the network device may acquire more accurate information for subsequent operations.

In some embodiments, as shown in FIG. 9, the method further includes the followings.

In S22, first configuration information is sent to the UE, where the first configuration information configures the UE autonomous GNSS measurement configuration configured by the network device to be disabled or removed.

In some embodiments, after receiving the first indication information reported by the UE, the network device may send the first configuration information to the UE, for configuring one, some, or all of the UE autonomous GNSS measurement configurations configured by the network device to be disabled or removed.

In other words, after receiving the first indication information sent by the UE, the network device may determine one or some of UE autonomous GNSS measurement configurations configured by the network device to be disabled or removed, and send configuration information to the UE to inform the UE of the one or some or all of the measurement periods of the UE autonomous GNSS measurement configurations configured by the network device to be disabled or removed, thereby avoiding the conflict between "autonomous GNSS measurement performed during the connected-state DRX inactive period" and "UE autonomous GNSS measurement configured by the network ".

In the above-mentioned solution, the first configuration information includes at least one of the following:
second indication information used for determining the UE autonomous GNSS measurement configuration to be disabled or removed;
the ID of the UE autonomous GNSS measurement configuration to be disabled or removed;
the start time of the measurement period of the UE autonomous GNSS measurement configuration to be disabled or removed;
the measurement duration of the UE autonomous GNSS measurement configuration to be disabled or removed.

In some embodiments, the first configuration information may be sent using a radio resource control (RRC) message or a medium access control (MAC) control element (CE) message.

It should be noted that the above-mentioned second indication information may explicitly or implicitly indicate which measurement periods of the UE autonomous GNSS measurement configuration are to be disabled or removed, or may not indicate which specific configuration is to be disabled or removed. Instead, based on the receiving time of the second indication information, the UE autonomously disables or removes the measurement period of the UE autonomous GNSS measurement closest to the receiving time.

It should be further noted that the measurement duration of the UE autonomous GNSS measurement configuration to be disabled or removed may be one measurement period or multiple periods corresponding to periodic measurements, which is not limited in the embodiments.

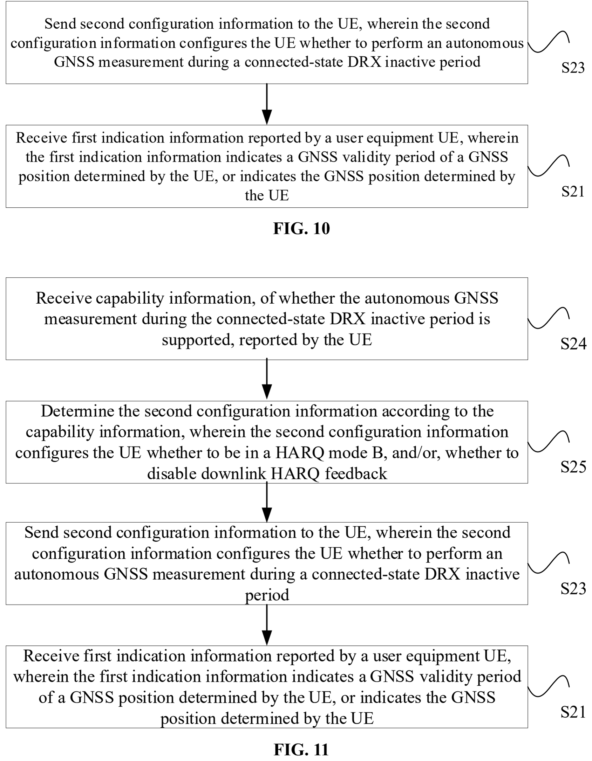

In some embodiments, as shown in FIG. 10, the method further includes the followings.

In S23, second configuration information is sent to the UE, where the second configuration information configures the UE whether to perform the autonomous GNSS measurement during the connected-state DRX inactive period.

In other words, the network device may configure whether the UE can perform autonomous GNSS measurements during the connected-state DRX inactive period. If yes, when the UE acquires the GNSS position by performing autonomous GNSS measurements during the connected-state DRX inactive period, the UE reports indication information to the network device to inform the network device of the acquired GNSS position, thereby providing a basis for subsequent operations.

In some embodiments, the second configuration information may be sent using a radio resource control (RRC) message or a medium access control (MAC) control element (CE) message.

In some embodiments, as shown in FIG. 11, the method further includes the followings.

In S24, capability information, of whether the autonomous GNSS measurement during the connected-state DRX inactive period is supported, reported by the UE is received.

In S25, second configuration information is determined according to the capability information, where the second configuration information configures the UE on whether to be in a HARQ mode B, and/or, whether to disable downlink HARQ feedback.

In some embodiments, the network device may determine the second configuration information based on the capability information reported by the UE on whether it supports autonomous GNSS measurement during the connected-state DRX inactive period, so as to configure whether the UE can perform autonomous GNSS measurement during the connected-state DRX inactive period.

Exemplarily, if the second configuration information configures the UE to be in the HARQ Mode B and/or to disable downlink HARQ feedback, the UE determines to perform autonomous GNSS measurements during the connected-state DRX inactive period based on the received second configuration information. Otherwise, the UE cannot perform autonomous GNSS measurements during the connected-state DRX inactive period.

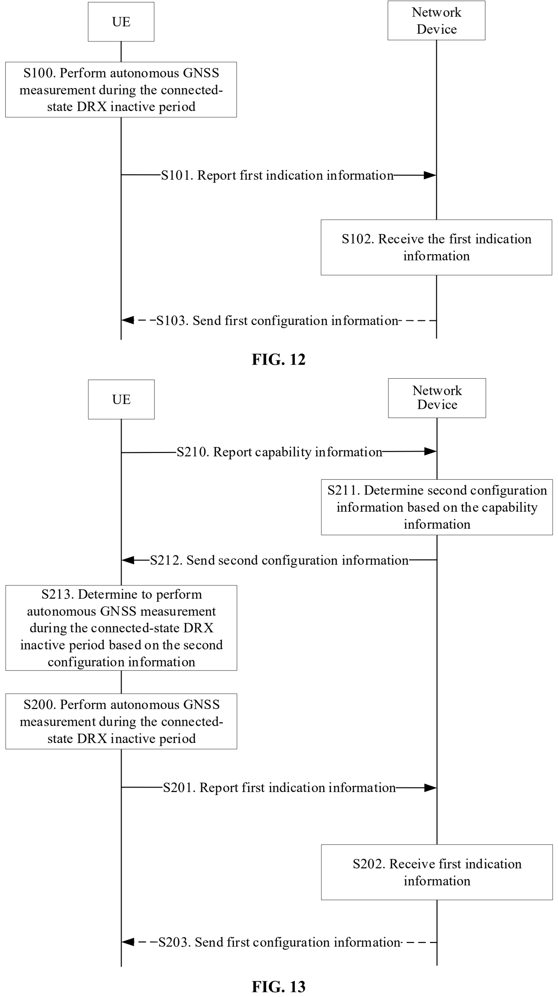

The above-mentioned solutions provided by the embodiments of the present disclosure are described from the perspectives of the UE side and the network device side respectively in combination with FIG. 3 to FIG. 11. The implementation process of the solutions provided by the embodiments of the present disclosure is described in detail below in combination with FIG. 12 and FIG. 13.

In an embodiment, the method shown in FIG. 12 may include the followings.

In S100, the UE performs autonomous GNSS measurement during the connected-state DRX inactive period.

In S101, the UE acquires the GNSS position based on autonomous GNSS measurement during the connected-state DRX inactive period, and reports the first indication information to the network device.

The first indication information indicates the GNSS validity period of the acquired GNSS position, or indicates the acquired GNSS position.

In S102, the network device receives the first indication information reported by the UE.

In other words, if the UE acquires the GNSS position in the process of the autonomous GNSS measurement during the connected-state DRX inactive period, the UE may report indication information (corresponding to the first indication information in the present disclosure) to the network device, indicating the acquired GNSS position, or indicating the GNSS validity period of the acquired GNSS position, so as to inform the network device of the acquired GNSS position, thereby providing the basis for subsequent operations.

In an exemplary embodiment, the above-mentioned solution may further include the followings.

In S103, the network device sends first configuration information to the UE, where the first configuration information configures the UE autonomous GNSS measurement configuration configured by the network device to be disabled or removed.

In other words, after receiving the first indication information sent by the UE, the network device may determine one or some of UE autonomous GNSS measurement configurations configured by the network device to be disabled or removed, and send configuration information to the UE to inform the UE of the one or some or all of the measurement periods of the UE autonomous GNSS measurement configurations configured by the network device to be disabled or removed, thereby avoiding the conflict between "autonomous GNSS measurement performed during the connected-state DRX inactive period" and "UE autonomous GNSS measurement configured by the network ".

In another embodiment, the method shown in FIG. 13 may include the followings.

In S210, the UE reports, to the network device, capability information on whether it supports autonomous GNSS measurement during the connected-state DRX inactive period, where the capability information is used for determining the second configuration information.

In S211, the network device receives the capability information reported by the UE, and determines the second configuration information based on the capability information.

In S212, the network device sends the second configuration information to the UE.

In S213, the UE determines whether to perform autonomous GNSS measurement during the connected-state DRX inactive period based on the received second configuration information. If the second configuration information configures the UE to perform autonomous GNSS measurement during the connected-state DRX inactive period, the steps S200 - S202 or steps S200 - S203 are executed.

Specifically, in some embodiments, if the second configuration information configures the UE to be in the HARQ mode B and/or to disable downlink HARQ feedback, the autonomous GNSS measurement during the connected-state DRX inactive period may be performed by UE and the steps S200 - S202 or steps S200 - S203 may be executed.

In other words, the UE is to perform autonomous GNSS measurement during the connected-state DRX inactive period if a condition is met. The condition may be determined based on the UE's capability information, or the condition may be that the validity period of the last acquired GNSS has not expired.

It should be noted that, in some embodiments, S200 -S203 respectively correspond to S100 - S103 in the above-mentioned embodiments, which are not repeated here for the sake of brevity.

It should further be noted that, in the above-mentioned embodiments, the UE may further perform at least one of the following operations 1 - 4.
1. A new GNSS position is acquired before start of the measurement period of the UE autonomous GNSS measurement configured by the network device, and any one of the following operations is performed:
   the UE autonomous GNSS measurement configuration configured by the network device is deleted;
   the invalidation of the UE autonomous GNSS measurement configuration configured by the network device is determined;
   the GNSS measurement is not performed during a measurement period of the UE autonomous GNSS measurement configuration configured by the network device;
   whether to perform the GNSS measurement, during the measurement period of the UE autonomous GNSS measurement configuration configured by the network device, is determined.
   The way determining whether to perform GNSS measurement during the measurement period of UE autonomous GNSS measurement configured by the network device may include the following:
   whether to perform the GNSS measurement during the measurement period is determined based on whether a time interval, between an acquisition time of the new GNSS position and a start time of the measurement period, is greater than a second threshold; or,
   whether to perform the GNSS measurement during the measurement period is determined based on whether the remaining GNSS validity period, at the start time of the measurement period, is greater than the third threshold.
2. When the GNSS position of the UE is outdated, and the new GNSS position fails to be acquired through autonomous GNSS measurement during the connected-state DRX inactive period, the UE enters the idle state.
3. When the GNSS position of the UE is outdated, the new GNSS position fails to be acquired through autonomous GNSS measurement during the connected-state DRX inactive period, and no other GNSS measurement is performed in progress or no other GNSS measurement is performed after the first duration, the UE enters the idle state.
   The other GNSS measurements include at least one of the following:
   the GNSS measurement triggered by the network device;
   the UE autonomous GNSS measurement configured by the network device.
4. When the autonomous GNSS measurement during the connected-state DRX inactive period is performed, the GNSS measurement is performed based on the GNSS measurement gap upon reaching the start time of the GNSS measurement gap configured by the network device.

The GNSS measurement based on the GNSS measurement gap includes at least one of the following:
the GNSS measurement triggered by the network device;
the UE autonomous GNSS measurement configured by the network device.

It should further be noted that, in the above-mentioned embodiments, the UE performs autonomous GNSS measurement during the connected-state DRX inactive period, without affecting at least one of the following operations:
the reception or transmission of an ACK during the connected-state DRX inactive period;
the reception or transmission of a NACK during the connected-state DRX inactive period;
the transmission of the channel SRS during the connected-state DRX inactive period;
the monitoring for the reception of the PUSCH triggering B, during the connected-state DRX inactive period, and the addressing of the PDCCH of the CC-RNTI.

In summary, the present disclosure provides the measurement method that can solve at least the following problems when the UE performs GNSS measurement during the connected-state DRX inactive period:
1. behavior of the UE after acquiring the GNSS position;
2. after acquiring the GNSS position, whether the UE is to perform the GNSS measurement for the measurement gap configured by the network side;
3. under what conditions may the UE perform the GNSS measurement during the connected-state DRX inactive period;
4. limitation of the impact on other behaviors when the UE performs GNSS measurements during the connected-state DRX inactive period.

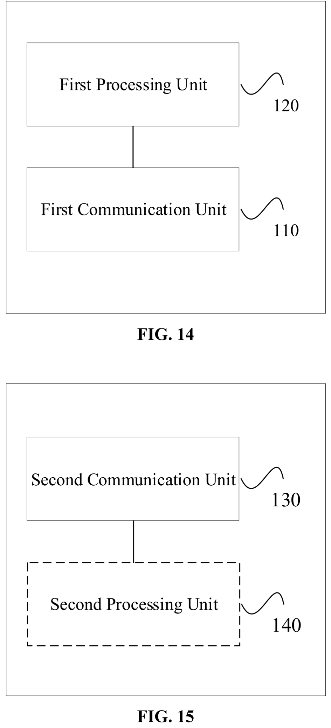

FIG. 14 is a block diagram of a measurement apparatus according to an exemplary embodiment of the present disclosure. The measurement apparatus is applied to the UE. Referring to FIG. 14, the apparatus includes a first processing unit 120 and a first communication unit 110.

The first processing unit 120 is configured to determine a GNSS position.

The first communication unit 110 is configured to report first indication information to a network device, where the first indication information indicates a GNSS validity period of the GNSS position, or indicates the GNSS position.

In some embodiments, the first processing unit 120 determines the GNSS position based on the autonomous GNSS measurement performed during the connected-state DRX inactive period.

In some embodiments, the first processing unit 120 is configured to perform autonomous GNSS measurement during the connected-state DRX inactive period when at least one of the following conditions is met:
the first condition being that all downlink HARQ of the UE are configured to disable HARQ feedback;
the second condition being that all uplink HARQ of the UE are configured in the HARQ mode B;
the third condition being before the expiry of the GNSS validity period of the last acquired GNSS position.

In the above-mentioned solution, the first processing unit 120 is configured to report the first indication information, indicating the GNSS validity period of the currently acquired GNSS position, to the network device if the difference between the GNSS validity period of the currently acquired GNSS position and the GNSS validity period of the last acquired GNSS position is greater than the first threshold.

In the above-mentioned solution, the GNSS validity period is the remaining GNSS validity period.

In some embodiments, the first processing unit 120 is further configured to determine the GNSS position before the start of the measurement period of the UE autonomous GNSS measurement configured by the network device, and perform any one of the following operations:
deleting the UE autonomous GNSS measurement configuration configured by the network device;
determining that the UE autonomous GNSS measurement configuration configured by the network device is invalid;
not performing the GNSS measurement during the measurement period of the UE autonomous GNSS measurement configuration configured by the network device;
determining whether to perform the GNSS measurement during the measurement period of the UE autonomous GNSS measurement configuration configured by the network device.

In the above-mentioned solution, determining whether to perform the GNSS measurement during the measurement period of the UE autonomous GNSS measurement configured by the network device includes the following:
determining whether to perform the GNSS measurement during the measurement period based on whether a time interval, between an acquisition time of the GNSS position and a start time of the measurement period, is greater than a second threshold; or
determining whether to perform the GNSS measurement during the measurement period based on whether a remaining GNSS validity period, at the start time of the measurement period, is greater than a third threshold.

In the above-mentioned solution, the first communication unit 110 is further configured to receive first configuration information sent by the network device, where the first configuration information configures a UE autonomous GNSS measurement configuration configured by the network device to be disabled or removed.

In the above-mentioned solution, the first configuration information includes at least one of the following:
second indication information used for determining the UE autonomous GNSS measurement configuration to be disabled or removed;
the ID of the UE autonomous GNSS measurement configuration to be disabled or removed;
the start time of the measurement period of the UE autonomous GNSS measurement configuration to be disabled or removed;
the measurement duration of the UE autonomous GNSS measurement configuration to be disabled or removed.

In the above-mentioned solution, the first processing unit 120 is further configured to determine to enter the idle state when one of the following conditions is met:
the fourth condition, being that the GNSS position is not acquired through the autonomous GNSS measurement performed during the connected-state DRX inactive period when the GNSS position of the UE expires;
the fifth condition, being that the GNSS position is not acquired through the autonomous GNSS measurement performed during the connected-state DRX inactive period when the GNSS position of the UE expires, and no other GNSS measurement is performed in progress or no other GNSS measurement is performed after the first duration.

In the above-mentioned solution, the other GNSS measurements include at least one of the following:
the GNSS measurement triggered by the network device;
the UE autonomous GNSS measurement configured by the network device.

In the above-mentioned solution, the measurement status of the autonomous GNSS measurement during the connected-state DRX inactive period includes at least one of the following: not yet performed, in progress, and completed.

In some embodiments, the first processing unit 120 is further configured to: when performing an autonomous GNSS measurement during a connected-state DRX inactive period, perform a GNSS measurement based on a GNSS measurement gap upon reaching a start time of a GNSS measurement gap configured by the network device.

In the above-mentioned solution, the GNSS measurement based on the GNSS measurement gap includes at least one of the following:
the GNSS measurement triggered by the network device;
the UE autonomous GNSS measurement configured by the network device.

In some embodiments, the first communication unit 110 is further configured to receive second configuration information sent by the network device, where the second configuration information configures the UE whether to perform the autonomous GNSS measurement during the connected-state DRX inactive period.

In some embodiments, the first communication unit 110 is further configured to report capability information, of whether the autonomous GNSS measurement during the connected-state DRX inactive period is supported, to the network device, where the capability information is used for determining the second configuration information.

In some embodiments, the first processing unit 120 is further configured to determine whether to perform the autonomous GNSS measurement during the connected-state DRX inactive period according to the second configuration information.

In the above-mentioned solution, the second configuration information includes configuring the UE in the HARQ mode B, and/or, disabling downlink HARQ feedback; and the first processing unit 120 is configured to determine to perform the autonomous GNSS measurement during the connected-state DRX inactive period.

In the above-mentioned solution, at least one of the following operations is not affected by performing an autonomous GNSS measurement during the connected-state DRX inactive period:
receiving or sending an acknowledgment message ACK during the connected-state DRX inactive period;
receiving or sending a non-acknowledgement message NACK during the connected-state DRX inactive period;
sending a channel sounding reference signal SRS during the connected-state DRX inactive period;
monitoring, for a reception of a physical uplink shared channel PUSCH triggering B, during the connected-state DRX inactive period, and addressing to a physical downlink control channel PDCCH of a common cell radio network temporary identifier CC-RNTI.

Regarding the apparatus in the above-mentioned embodiment, the specific way in which each unit performs operations has been described in detail in the embodiments of the method, and will not be elaborated here.

In practical applications, the specific structures of the above-mentioned first communication unit 110 and the first processing unit 120 may be implemented by a central processing unit (CPU), a micro controller unit (MCU), a digital signal processor (DSP), or a programmable logic controller (PLC) in the measuring apparatus or the terminal to which the measuring apparatus belongs.

The measurement apparatus described in some embodiments may be provided on the UE side.

Those skilled in the art should understand that the functions of each unit in the measurement apparatus of the embodiment of the present disclosure can be understood with reference to the relevant description of the measurement method applied to the UE side. The functions of each unit in the measurement apparatus of the embodiments of the present disclosure may be implemented by an analog circuit that implements the functions described in the embodiments of the present disclosure, or by running software that executes the functions described in the embodiments of the present disclosure on a terminal.

The technical effects that can be achieved by the measurement apparatus described in the embodiments of the present disclosure can refer to the relevant description of the measurement method applied to the UE side above-mentioned.

FIG. 15 is a block diagram of a measurement apparatus according to an exemplary embodiment of the present disclosure. The measurement apparatus is applied to the network device such as a base station. Referring to FIG. 15, the apparatus includes: a second communication unit 130.

The second communication unit 130 is configured to receive first indication information reported by the user equipment UE, where the first indication information indicates the GNSS validity period of the GNSS position, or indicates the GNSS position.

In the above-mentioned solution, the first indication information is reported when the GNSS position is acquired by the UE based on the autonomous GNSS measurement performed during the connected-state DRX inactive period.

In some embodiments, the first indication information, indicating the GNSS validity period of the GNSS position currently acquired, is reported when the difference between the GNSS validity period of the GNSS position currently acquired by the UE and the GNSS validity period of the GNSS position last acquired by the UE is greater than the first threshold.

In the above-mentioned solution, the GNSS validity period is the remaining GNSS validity period.

In some embodiments, the second communication unit 130 is further configured to send first configuration information to the UE, where the first configuration information configures the UE autonomous GNSS measurement configuration configured by the network device to be disabled or removed.

In the above-mentioned solution, the first configuration information includes at least one of the following:
second indication information used for determining the UE autonomous GNSS measurement configuration to be disabled or removed;
the ID of the UE autonomous GNSS measurement configuration to be disabled or removed;
the start time of the measurement period of the UE autonomous GNSS measurement configuration to be disabled or removed;
the measurement duration of the UE autonomous GNSS measurement configuration to be disabled or removed.

In some embodiments, the second communication unit 130 is further configured to send second configuration information to the UE, where the second configuration information configures the UE whether to perform an autonomous GNSS measurement during a connected-state DRX inactive period performed.

In some embodiments, the apparatus further includes: a second processing unit 140.

The second communication unit 130 is further configured to receive capability information, of whether the autonomous GNSS measurement during the connected-state DRX inactive period is supported, reported by the UE.

The second processing unit 140 is configured to determine the second configuration information according to the capability information, where the second configuration information configures the UE whether to be in a HARQ mode B, and/or, whether to disable downlink HARQ feedback.

Regarding the apparatus in the above-mentioned embodiment, the specific manner in which each unit performs operations has been described in detail in the embodiments of the method, and will not be elaborated here.

In practical applications, the specific structures of the second communication unit 130 and the second processing unit 140 may be implemented by a CPU, a MCU, a DSP or a PLC in the measurement apparatus or the base station to which the measurement apparatus belongs.

The measurement apparatus described in some embodiments may be provided on the network device such as a base station.

Those skilled in the art should be understood that the functions of each unit in the measurement apparatus of the embodiments of the present disclosure can be understood with reference to the aforementioned description of the measurement method applied to the network device, such as a base station. The functions of each unit in the measurement apparatus of the embodiments of the present disclosure can be implemented by analog circuits that implement the functions described in the embodiments of the present disclosure, or by software that executes the functions described in the embodiments of the present disclosure and runs on a base station.

The technical effects that can be achieved by the measurement apparatus described in the embodiments of the present disclosure can be referred to the relevant description of the aforementioned measurement method applied to the network device side.

Based on the same principle as the method provided in some embodiments of the present disclosure, the embodiments of the present disclosure also provide a communication device, which includes a memory and a processor, where a computer program is stored in the memory, and when the processor runs the computer program stored in the memory, the measurement method provided in any optional embodiment of the present disclosure can be executed.

The present disclosure also provides a communication system, including a user equipment and a network device, where the user equipment is configured to implement the measurement method provided in any optional embodiment of the present disclosure, and the network device is configured to implement the measurement method provided in any optional embodiment of the present disclosure.

Some embodiments of the present disclosure further provide a computer-readable storage medium, in which a computer program is stored. When the computer program is executed by a processor, the measurement method provided in any optional embodiment of the present disclosure can be executed.

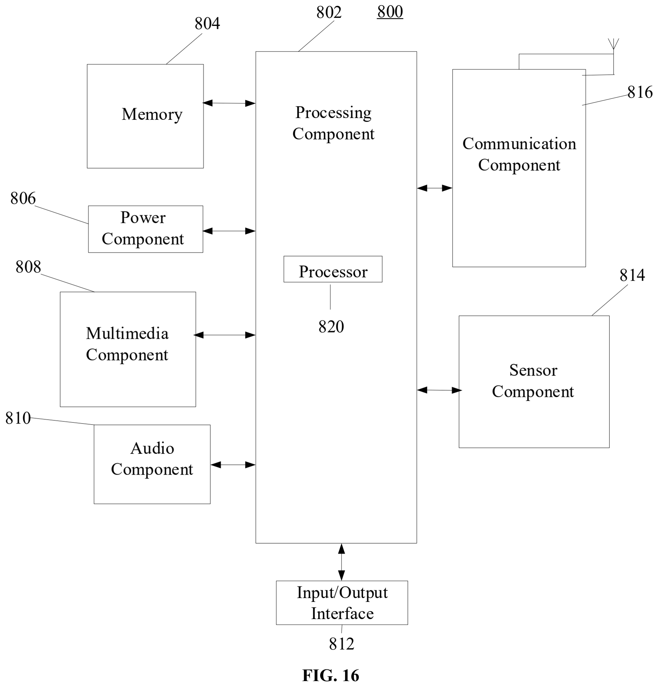

FIG. 16 is a block diagram illustrating an apparatus 800 for implementing measurement according to an exemplary embodiment. For example, the apparatus 800 may be a mobile phone, a computer, a digital broadcast terminal, a messaging device, a game console, a tablet device, a medical device, a fitness device, a personal digital assistant and the like.

Referring to FIG. 16, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the apparatus 800, such as operations associated with display, phone call, data communication, camera operation, and recording operation. The processing component 802 may include one or more processors 820 to execute instructions to perform all or part of the steps of the above-mentioned methods. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations on the apparatus 800. Examples of such data include instructions for any application or method operating on the apparatus 800, such as contact data, phone book data, messages, pictures, videos and the like. The memory 804 can be implemented by any type of volatile or non-volatile memory device, or a combination thereof, such as static random-access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 806 provides power to the various components of the apparatus 800. The power component 806 may include a power management system, one or more power supplies, and other components associated with generating, managing, and distributing power to the apparatus 800.

The multimedia component 808 includes a screen that provides an output interface between the apparatus 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the apparatus 800 is in an operating mode, such as a shooting mode or a video mode, the front camera and/or the rear camera may receive external multimedia data. Each front camera and rear camera may be a fixed optical lens system or have focal length and optical zoom capabilities.

The audio component 810 is configured to output and/or input audio signals. For example, the audio component 810 includes a microphone (MIC), which is configured to receive external audio signals when the apparatus 800 is in an operating mode, such as a call mode, a recording mode, and a voice recognition mode. The received audio signals may be further stored in the memory 804 or transmitted via the communication component 816. In some embodiments, the audio component 810 further includes a speaker for outputting audio signals.

I/O interface 812 provides an interface between processing component 802 and peripheral interface modules, such as a keyboard, click wheel, buttons and the like. These buttons may include but are not limited to: a home button, a volume button, a start button, and a lock button.

The sensor assembly 814 includes one or more sensors for providing various aspects of the status assessment of the apparatus 800. For example, the sensor assembly 814 can detect the turn-on/off state of the apparatus 800, the relative positioning of components, such as the display and keypad of the apparatus 800, and the sensor assembly 814 may also detect changes in the position of the apparatus 800 or a component of the apparatus 800, the presence or absence of user contact with the apparatus 800, the orientation or acceleration/deceleration of the apparatus 800, and temperature changes of the apparatus 800. The sensor assembly 814 may include a proximity sensor configured to detect the presence of a nearby object without any physical contact. The sensor assembly 814 may further include an optical sensor, such as a complementary metal oxide semiconductor (CMOS) or a charge-coupled device (CCD) image sensor for use in imaging applications. In some embodiments, the sensor component 814 may further include an acceleration sensor, a gyroscope sensor, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as Wi-Fi, 2G or 3G, or a combination thereof. In an exemplary embodiment, the communication component 816 receives broadcast signals or broadcast-related information from an external broadcast management system via a broadcast channel. In an exemplary embodiment, the communication component 816 further includes a near field communication (NFC) module to facilitate short-range communication. For example, the NFC module can be based on radio frequency identification (RFID) technology, infrared data association (IrDA) technology, ultra wide band (UWB) technology, blue tooth (BT) technology and other technologies.

In an exemplary embodiment, the apparatus 800 may be implemented by one or more application specific integrated circuits (ASIC), digital signal processor (DSP), digital signal processing device (DSPD), programmable logic device (PLD), field programmable gate array (FPGA), controller, microcontroller, microprocessor or other electronic components are implemented to execute the above-mentioned measurement method applied to the user terminal side.

In an exemplary embodiment, a non-transitory computer storage medium including executable instructions is also provided, such as a memory 804 including executable instructions, which can be executed by the processor 820 of the apparatus 800 to perform the above-mentioned method. For example, the non-transitory computer storage medium may be ROM, random access memory (RAM), access memory (RAM), CD-ROM, magnetic tape, floppy disk, and optical data storage device and the like.

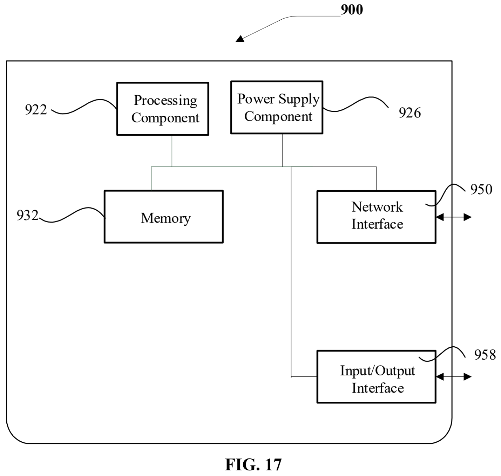

FIG. 17 is a block diagram illustrating an apparatus 900 for implementing measurement according to an exemplary embodiment. Referring to FIG. 17, apparatus 900 includes a processing component 922, which further includes one or more processors, and memory resource represented by memory 932 for storing instructions executable by processing component 922, such as applications. The applications stored in memory 932 may include one or more modules, each corresponding to a set of instructions. Furthermore, processing component 922 is configured to execute instructions to perform the aforementioned measurement method applied to the network device.

The apparatus 900 may also include a power supply component 926 configured to perform power management of the apparatus 900, a wired or wireless network interface 950 configured to connect the apparatus 900 to a network, and an input/output (I/O) interface 958. The apparatus 900 may operate based on an operating system stored in the memory 932, such as Windows Server TM, Mac OS XTM, Unix TM, Linux TM, Free BSD TM or the like.

The technical solutions described in the embodiments of the present disclosure may be arbitrarily combined without conflict.

Other embodiments of the present disclosure will readily occur to those skilled in the art after considering the specification and practicing the disclosure disclosed herein. The present disclosure is intended to cover any variations, uses, or adaptations of the disclosure that follow the general principles of the disclosure and include common knowledge or customary techniques in the art not disclosed herein. The description and examples are to be considered as exemplary only, with the true scope and spirit of the disclosure being indicated by the following claims.

It should be understood that the present disclosure is not limited to the exact construction described above and shown in the drawings, and that various modifications and changes may be made without departing from the scope thereof. The scope of the present disclosure is limited only by the appended claims.

## Claims

1. A measurement method, being applied to a user equipment UE and comprising:
determining a global navigation satellite system GNSS position;
reporting first indication information to a network device, wherein the first indication information indicates a GNSS validity period of the GNSS position, or indicates the GNSS position.

2. The method according to claim 1, wherein determining the GNSS position comprises:
determining the GNSS position based on an autonomous GNSS measurement performed during a connected-state discontinuous reception DRX inactive period.

3. The method according to claim 2, wherein, performing the autonomous GNSS measurement during the connected-state DRX inactive period when at least one of the following conditions is met:
a first condition, being that all downlink hybrid automatic repeat requests HARQ of the UE are configured to disable HARQ feedback;
a second condition, being that all uplink HARQ of the UE are configured in a HARQ mode B;
a third condition, being before an expiry of a GNSS validity period of a last acquired GNSS position.

4. The method according to any one of claims 1 to 3, wherein, if a difference between a GNSS validity period of a currently acquired GNSS position and a GNSS validity period of a last acquired GNSS position is greater than a first threshold, reporting the first indication information, indicating the GNSS validity period of the currently acquired GNSS position, to the network device.

5. The method according to claim 4, wherein the GNSS validity period is a remaining GNSS validity period.

6. The method according to any one of claims 1 to 5, further comprising:
determining the GNSS position before start of a measurement period of a UE autonomous GNSS measurement configured by the network device, and performing any one of the following operations:
deleting a UE autonomous GNSS measurement configuration configured by the network device;
determining that the UE autonomous GNSS measurement configuration configured by the network device is invalid;
not performing a GNSS measurement during a measurement period of the UE autonomous GNSS measurement configuration configured by the network device;
determining whether to perform the GNSS measurement during the measurement period of the UE autonomous GNSS measurement configuration configured by the network device.

7. The method according to claim 6, wherein determining whether to perform the GNSS measurement during the measurement period of the UE autonomous GNSS measurement configured by the network device comprises:
determining whether to perform the GNSS measurement during the measurement period based on whether a time interval, between an acquisition time of the GNSS position and a start time of the measurement period, is greater than a second threshold; or
determining whether to perform the GNSS measurement during the measurement period based on whether a remaining GNSS validity period, at the start time of the measurement period, is greater than a third threshold.

8. The method according to any one of claims 1 to 7, further comprising:
receiving first configuration information sent by the network device, wherein the first configuration information configures a UE autonomous GNSS measurement configuration configured by the network device to be disabled or removed.

9. The method according to claim 8, wherein the first configuration information comprises at least one of the following:
second indication information used for determining the UE autonomous GNSS measurement configuration to be disabled or removed;
an ID of the UE autonomous GNSS measurement configuration to be disabled or removed;
a start time of the measurement period of the UE autonomous GNSS measurement configuration to be disabled or removed;
a measurement duration of the UE autonomous GNSS measurement configuration to be disabled or removed.

10. The method according to any one of claims 1 to 9, further comprising:
determining to enter an idle state when one of the following conditions is met:
a fourth condition, being that the GNSS position is not acquired through the autonomous GNSS measurement performed during a connected-state DRX inactive period when the GNSS position of the UE expires;
a fifth condition, being that the GNSS position is not acquired through the autonomous GNSS measurement performed during the connected-state DRX inactive period when the GNSS position of the UE expires, and no other GNSS measurement is performed in progress or no other GNSS measurement is performed after a first duration.

11. The method according to claim 10, wherein the other GNSS measurement comprises at least one of the following:
a GNSS measurement triggered by the network device;
a UE autonomous GNSS measurement configured by the network device.

12. The method according to any one of claims 1 to 11, wherein a measurement status of an autonomous GNSS measurement during a connected-state DRX inactive period comprises at least one of the following: not yet performed, in progress, and completed.

13. The method according to any one of claims 1 to 12, further comprising:
when performing an autonomous GNSS measurement during a connected-state DRX inactive period, performing a GNSS measurement based on a GNSS measurement gap upon reaching a start time of a GNSS measurement gap configured by the network device.

14. The method according to claim 13, wherein the GNSS measurement based on the GNSS measurement gap comprises at least one of the following:
a GNSS measurement triggered by the network device;
a UE autonomous GNSS measurement configured by the network device.

15. The method according to any one of claims 1 to 14, further comprising:
receiving second configuration information sent by the network device, wherein the second configuration information configures the UE whether to perform an autonomous GNSS measurement during a connected-state DRX inactive period.

16. The method according to claim 15, further comprising:
reporting capability information, of whether the autonomous GNSS measurement during the connected-state DRX inactive period is supported, to the network device, wherein the capability information is used for determining the second configuration information.

17. The method according to claim 16, further comprising:
determining whether to perform the autonomous GNSS measurement during the connected-state DRX inactive period according to the second configuration information.

18. The method according to claim 17, wherein the second configuration information comprises configuring the UE in a HARQ mode B, and/or, disabling downlink HARQ feedback; and determining to perform the autonomous GNSS measurement during the connected-state DRX inactive period.

19. The method according to any one of claims 1 to 18, wherein at least one of the following operations is not affected by performing an autonomous GNSS measurement during a connected-state DRX inactive period:
receiving or sending an acknowledgment message ACK during the connected-state DRX inactive period;
receiving or sending a non-acknowledgement message NACK during the connected-state DRX inactive period;
sending a channel sounding reference signal SRS during the connected-state DRX inactive period;
monitoring, for a reception of a physical uplink shared channel PUSCH triggering B, during the connected-state DRX inactive period, and addressing to a physical downlink control channel PDCCH of a common cell radio network temporary identifier CC-RNTI.

20. A measurement method, being applied to a network device and comprising:
receiving first indication information reported by a user equipment UE, wherein the first indication information indicates a GNSS validity period of a GNSS position determined by the UE, or indicates the GNSS position determined by the UE.

21. The method according to claim 20, wherein the first indication information is reported when the GNSS position is acquired by the UE based on an autonomous GNSS measurement performed during a connected-state DRX inactive period.

22. The method according to claim 20 or 21, wherein the first indication information, indicating a GNSS validity period of a GNSS position currently acquired, is reported when a difference between a GNSS validity period of a GNSS position currently acquired by the UE and a GNSS validity period of a GNSS position last acquired by the UE is greater than a first threshold.

23. The method according to claim 22, wherein the GNSS validity period is a remaining GNSS validity period.

24. The method according to any one of claims 20 to 23, further comprising:
sending first configuration information to the UE, wherein the first configuration information configures a UE autonomous GNSS measurement configuration configured by the network device to be disabled or removed.

25. The method according to claim 24, wherein the first configuration information comprises at least one of the following:
second indication information used for determining the UE autonomous GNSS measurement configuration to be disabled or removed;
an ID of the UE autonomous GNSS measurement configuration to be disabled or removed;
a start time of the measurement period of the UE autonomous GNSS measurement configuration to be disabled or removed;
a measurement duration of the UE autonomous GNSS measurement configuration to be disabled or removed.

26. The method according to any one of claims 20 to 25, further comprising:
sending second configuration information to the UE, wherein the second configuration information configures the UE whether to perform an autonomous GNSS measurement during a connected-state DRX inactive period performed.

27. The method according to claim 26, further comprising:
receiving capability information, of whether the autonomous GNSS measurement during the connected-state DRX inactive period is supported, reported by the UE;
determining the second configuration information according to the capability information, wherein the second configuration information configures the UE whether to be in a HARQ mode B, and/or, whether to disable downlink HARQ feedback.

28. A measurement apparatus, being applied to a user equipment UE and comprising:
a first processing unit, configured to determine a global navigation satellite system GNSS position;
a first communication unit, configured to report first indication information to a network device, wherein the first indication information indicates a GNSS validity period of the GNSS position, or indicates the GNSS position.

29. A measuring apparatus, being applied to a network device and comprising:
a second communication unit, configured to receive first indication information reported by a user equipment UE, wherein the first indication information indicates a GNSS validity period of a GNSS position determined by the UE, or indicates the GNSS position determined by the UE.

30. A communication device, comprising:
a transceiver;
a processor;
a memory storing a computer-executable instruction;
wherein, the processor is connected to the transceiver and the memory respectively, and configured to load and execute the computer-executable instruction to implement the measurement method according to any one of claims 1 to 19 or claims 20 to 27.

31. A communication system, comprising: a user equipment and a network device, wherein the user equipment is configured to implement the measurement method according to any one of claims 1 to 19, and the network device is configured to implement the measurement method according to any one of claims 20 to 27.

32. A computer-readable storage medium storing a computer program, wherein the computer-readable storage medium stores an executable instruction, and the executable instruction is loaded and executed by the processor to implement the measurement method according to any one of claims 1 to 19 or claims 20 to 27.
